# FASCICULE DE BREVET EUROPEEN

(11) **EP 2 551 156 B1**
(45) Date de publication et mention de la délivrance du brevet: **25.02.2015**
(21) Numéro de dépôt: 12175810.6
(22) Date de dépôt: 10.07.2012
(51) Int. Cl.: B60R 11/00, B60R 11/02

(54) **Support PC adaptable aux sieges automobile**
PC-Halter, der an Autositze angepasst werden kann
PC support adaptable to motor-vehicle seats

(30) Priorité: 25.07.2011 FR 1156746
(43) Date de publication de la demande: 30.01.2013
(73) Titulaire: PEUGEOT CITROËN AUTOMOBILES SA, 78140 Velizy-Villacoublay (FR); CR2MS, 25200 Montbeliard (FR)
(72) Inventeur: Germanese, Lucien, 90500 Beaucourt (FR); Romain, M. Mickael, 90000 Belfort (FR); Ruffinoni, Marc, 90000 Belfort (FR); Labalette, Carole, 25700 Valentigney (FR)

(56) Documents cités:
- DE-U1- 9 417 328
- GB-A- 2 356 340

## Description

La présente invention concerne un dispositif permettant de supporter un ordinateur portable à un siège d'un véhicule, tel qu'un véhicule automobile.

La mise au point des paramètres de fonctionnement du moteur d'un véhicule dans des conditions de roulage du véhicule nécessite l'acquisition de données relatives à ses paramètres, tels que par exemple la pression de suralimentation du moteur, l'avance à injection, etc., qui doivent être exploitées par un spécialiste conduisant le véhicule pour contrôler et ajuster ces paramètres dans des conditions réelles d'essais.

L'acquisition de ces données nécessite l'utilisation d'un ordinateur portable embarqué au véhicule avec l'écran ouvert pour permettre la visualisation des données relatives aux paramètres de fonctionnement du moteur du véhicule.

La présence de l'ordinateur portable dans l'habitacle du véhicule pose des problèmes d'installation et de fixation de cet ordinateur à un endroit approprié du véhicule ne devant pas gêner le conducteur du véhicule.

Une solution consiste à poser l'ordinateur portable sur l'assise du siège passager avant du véhicule en le maintenant, le cas échéant, par au moins une sangle. Cependant cette solution connue oblige le conducteur du véhicule a quitter la route du regard pendant plusieurs secondes pour consulter les données relatives aux paramètres de fonctionnement du moteur sur l'écran ouvert de l'ordinateur portable.

D'autres solutions consistent à utiliser des dispositifs de support de l'ordinateur portable dans l'habitacle du véhicule.

L'un de ces dispositifs comprend une colonne fixée devant le siège du passager avant du véhicule entre le plancher et le pare-brise par l'intermédiaire d'une ventouse et l'ordinateur portable est fixé sur une platine de support solidaire de la colonne. Cependant, ce dispositif ne garantit pas la sécurité du conducteur du véhicule en cas de roulage violent ou de choc violent du véhicule et occasionne des contraintes pouvant détériorer le pare-brise de ce véhicule.

Un autre dispositif comprend une armature fixée sur l'arrière du dossier du siège passager avant du véhicule et un bras articulé fixé à cette armature en reposant sur l'assise de ce siège, le bras articulé maintenant la platine de support de l'ordinateur portable. Comme pour le précédent, ce dispositif ne garantit pas la sécurité du conducteur en cas de roulage violent ou de choc violent du véhicule et, en outre, ne garantit pas la stabilité de l'ordinateur portable et nécessite un outillage particulier pour le montage et son réglage de position relativement au siège.

Encore un autre dispositif comprend un bras articulé en position verticale, fixé à une vis de maintien d'un rail de guidage du siège du passager avant du véhicule, la platine de support de l'ordinateur portable étant fixée en bout de ce bras. Ce dispositif ne garantit pas non plus la sécurité du conducteur en cas de roulage violent ou de choc violent du véhicule, ne garantit pas la stabilité de l'ordinateur portable et nécessite un outillage particulier pour son montage et son réglage. Le document DE E9417328 U1 décrit un dispositif permettant de supporter un ordinateur portable à un siège d'un véhicule sélon le préambule de la revendication 1.

Tous ces dispositifs, connus de fixation dans l'habitacle d'un véhicule d'un ordinateur portable ne garantissent pas un positionnement optimal de cet ordinateur dans le champ de vision du conducteur, sont très limités en fonctions des réglages disponibles et ne s'adaptent pas à tous les types de véhicules.

La présente invention a pour but de palier les inconvénients ci-dessus de ces dispositifs connus.

A cet effet, selon l'invention, le dispositif permettant de supporter un ordinateur portable à un siège d'un véhicule, tel qu'un véhicule automobile, est **caractérisé en ce qu'**il comprend une armature pouvant être amoviblement fixée à la face avant du dossier par au moins une sangle, un ensemble de support d'une platine de réception de l'ordinateur portable comprenant un bras de support ayant l'une de ses extrémités reliée articulée à l'armature et son extrémité opposée reliée à une plaque pouvant venir en appui sur l'assise du siège et une partie formant pied de support de la platine montée à rotation et à coulissement guidée sur le bras du support et pouvant être bloquée sur ce dernier par des moyens de blocage à une position relative prédéterminée, la partie formant pied de support comprenant une colonne portant à l'une de ses extrémités la platine.

De préférence, la partie formant pied de support comprend également une chape de support de la colonne et un bloc de support de la chape monté à rotation et à coulissement guidé sur le bras de support, la chape pouvant pivoter relativement au bloc et être bloquée au bloc à une position angulaire relative déterminée par les moyens de blocage permettant de bloquer le bloc au bras de support.

Avantageusement, la colonne est solidarisée à l'âme de la chape par un moyen autorisant un réglage de position de la colonne relativement à la chape par rotation d'elle-même.

Les moyens de blocage du bloc au bras de support et de la chape à ce bloc comprennent une tige filetée traversant l'une des branches de la chape et le bloc perpendiculairement au bras de support, un écrou inséré dans un logement du bloc, apte à se déplacer dans le logement en direction transversale au bras de support et ancré à une extrémité de la tige filetée qui est solidarisée à son extrémité opposée à un organe externe rotatif de serrage, tel qu'un bouton, apte à entraîner en rotation la tige filetée, un tampon tangent inséré dans le logement du bloc formant avec l'écrou un équipage mobile, et une entretoise à collerette externe montée coaxialement à la tige filetée entre l'organe externe et le bloc en traversant la branche de la chape et engagée dans un orifice du bloc, une manoeuvre de l'organe rotatif provoquant le déplacement en translation de l'équipage mobile pour amener le tampon tangent en appui forcé sur le bras de support et bloquer le bloc à ce bras et de l'entretoise pour bloquer la chape relativement au bloc en enserrant la branche de la chape entre la collerette de l'entretoise et le bloc.

Avantageusement, des organes de freinage du pivotement de la chape relativement au bloc sont prévus entre le bloc et l'autre des branches de la chape.

Ces organes de freinage comprennent un boulon coaxial à la tige filetée de l'organe rotatif et dont la vis a sa tête logée dans le bloc en traversant l'autre branche de la chape et l'écrou, du type frein, est serré sur l'autre branche à un couple de serrage permettant le pivotement contrôlé de la chape.

Un moyen de verrouillage de la chape à une position angulaire relativement au bloc est prévu et comprend une goupille solidaire d'un bouton externe apte à être sélectivement introduite au travers de l'un de plusieurs perçages d'indexation de la branche de la chape et d'un perçage du bloc.

Des moyens de réglage et de blocage en position de la platine relativement à la colonne sont prévus et comprennent un tenon solidaire de la platine perpendiculairement à celle-ci engagé dans une fente longitudinale de la colonne, une vis traversant la fente de la colonne et une lumière longitudinale du tenon et un bouton ou une manette externe de serrage de la vis pour bloquer le tenon dans la fente de la colonne à une position longitudinale choisie du tenon relativement à la colonne.

Le moyen de réglage de position de la colonne relativement à la chape comprend un boulon dont la vis est ancrée longitudinalement de la colonne en traversant l'âme de la chape et l'écrou du type frein est serré sous l'âme de la chape.

Le bras de support est relié en partie supérieure de l'armature par l'intermédiaire de deux chapes d'articulation successives autorisant le pivotement du bras dans un plan perpendiculaire à l'assise du siège et dans un plan incliné relativement au dossier du siège, l'axe d'articulation de la chape autorisant le pivotement du bras dans un plan perpendiculaire à l'assise du siège étant constitué par une vis à bouton externe de blocage de cette articulation.

La plaque d'appui du bras de support sur l'assise du siège est fixée à l'assise par au moins une sangle.

La plaque d'appui du bras de support sur l'assise du siège est en forme de L et est fixée à ce bras par l'intermédiaire d'une équerre dont l'une des branches est fixée à l'une des branches de la plaque d'appui par une vis à bouton externe de manoeuvre traversant une lumière de la branche de l'équerre pour un réglage en hauteur de l'extrémité du bras de support et l'autre branche est fixée à l'extrémité du bras de support par une mâchoire.

La platine de réception de l'ordinateur portable comprend deux pattes en forme de crochet sous lesquelles peut être positionné le bord avant de l'ordinateur portable, une plaque en équerre mobile relativement à la platine et pouvant être amoviblement fixée à cette dernière à une position à laquelle peut venir en appui le bord arrière de l'ordinateur portable et un bras pouvant être fixé à une position réglable en hauteur relativement à la plaque en équerre pour maintenir l'écran de l'ordinateur portable en position ouverte, l'ordinateur portable étant fixé sur la platine par un moyen de fixation rapide du genre à cordelette passant le long de la charnière d'articulation de l'écran au clavier de l'ordinateur portable.

Avantageusement, le dispositif peut être rangé avec l'ordinateur portable dans une valise pouvant être équipée de roulettes de déplacement.

L'invention vise également un véhicule, tel qu'un véhicule automobile, qui est **caractérisé en ce qu'**il comprend un dispositif tel que défini précédemment et qui est monté au siège passager avant du véhicule.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective du dispositif de l'invention fixé à un siège d'un véhicule pour supporter un ordinateur portable ;
- la figure 2 est une vue en perspective agrandie avec coupe partielle suivant la flèche II de la figure 1 ;
- la figure 3 est une vue en coupe dans le plan P de la figure 1 ;
- la figure 4 est une vue en perspective de côté avec coupe partielle d'une variante de réalisation d'appui du dispositif à l'assise du siège du véhicule ;

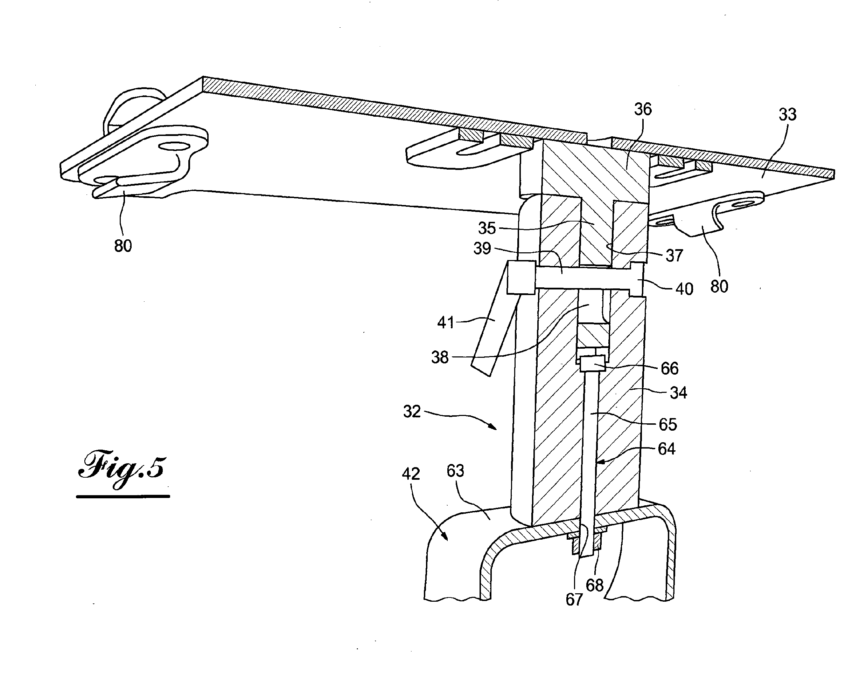

- la figure 5 est une vue en perspective avec coupe dans un plan vertical de l'ensemble formant pied de support de l'invention ;

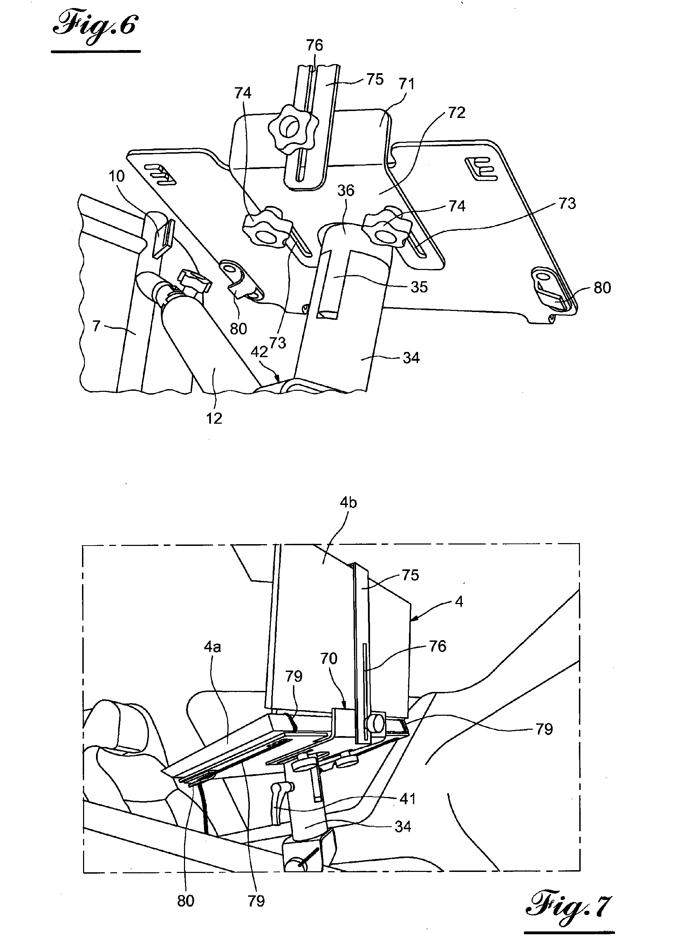

- la figure 6 est une vue en perspective de dessous suivant la flèche VI de la figure 1 ;
- la figure 7 est une vue partielle en perspective représentant l'ordinateur portable à une position de fixation sur sa platine de support ;
- la figure 8 est une vue en perspective représentant en position repliée l'ensemble formant pied de support et platine de réception de l'ordinateur portable en vue de son rangement dans une valise ;
- la figure 9 est une vue en perspective de dessus représentant le dispositif de l'invention en position repliée et rangée dans la valise de rangement ; et
- la figure 10 est une vue de dessus analogue à celle de la figure 9 et montrant l'ordinateur portable rangé sur le dispositif de l'invention replié dans la valise de rangement.

En se reportant aux figures, la référence 1 désigne un siège, notamment le siège d'un passager avant d'un véhicule automobile, et qui comprend un dossier 2 et une assise 3.

Le siège 1 est fixé au plancher, non représenté, du véhicule et peut coulisser d'avant en arrière du véhicule à une position de réglage déterminée par le passager du véhicule.

Le siège 1 est pourvu d'un dispositif permettant de supporter un ordinateur portable 4 à ce siège.

Selon l'invention, le dispositif de support de l'ordinateur portable 4 comprend une armature rigide 5 amoviblement fixée sur la face avant 2a du dossier 2 du siège 1 par l'intermédiaire de deux sangles supérieure et inférieure 6 entourant le dossier 2.

De préférence, l'armature 5 est constituée d'un cadre métallique rectangulaire à montants 7 et traverses 8, la hauteur des montants 7 et la largeur des traverses 8 étant dimensionnées pour s'adapter aux dimensions standards des sièges de véhicules.

En position de fixation d'armature 5, la traverse supérieure 8 est située au niveau supérieur du dossier 2 du siège 1 tandis que la traverse inférieure 8 est située en bas de ce dossier.

Les deux montants 7 de l'armature 5 sont prolongés à leurs extrémités inférieures respectivement par deux parties arquées 9 insérées dans l'espace transversal entre le dossier 2 et l'assise 3 du siège 1 pour éviter à l'armature 5 un déplacement vertical de celle-ci le long de la face avant 2a du dossier 2 en cas de sollicitation suivant cette direction sur l'armature 5 résultant, par exemple, d'un passage du véhicule sur un obstacle ménagé sur la chaussée obligeant les véhicules à ralentir et dénommé "gendarme couché".

Les montants 7 de l'armature 5 comprennent à leurs parties supérieures et à leurs parties inférieures deux paires de plots 10 faisant saillie d'un même côté des montants 7 et pourvus à leurs extrémités de lumières 11 parallèles aux montants 7. Les lumières 11 des deux plots supérieurs 10 permettent le passage de la sangle supérieure 6 tandis que les lumières 11 des deux plots inférieurs 10 permettent le passage de la sangle inférieure 6 de manière que ces sangles permettent la fixation de l'armature 5 en appui sur la face avant 2a du dossier 2.

Comme cela est connu en soi, chacune des deux sangles 6 comporte des moyens de réglage de la tension de serrage de la sangle.

Le dispositif de l'invention comprend en outre un bras de support 12 pouvant être constitué par un tube cylindrique métallique, par exemple en aluminium, et dont une extrémité est reliée par une double articulation en partie supérieure de l'un des deux montants 7 de l'armature 5, par exemple le montant gauche pour un véhicule à conduite à droite avec volant de direction situé à gauche du véhicule par rapport au sens d'avancement de celui-ci. Bien entendu, le bras de support 12 peut être fixé à l'autre montant pour un véhicule à conduite à gauche avec volant de direction situé à droite.

La première articulation du bras 12 de l'armature 5 comprend une chape 13 solidaire de l'extrémité du bras 12 coaxialement à celui-ci et d'axe de pivotement 14 orienté de manière à permettre le pivotement du bras 12 dans un plan perpendiculaire au dossier 2 et à l'assise 3 du siège 1.

Un tenon 15 est fixé entre les deux branches 13a de la chape 13 par l'intermédiaire de l'axe de pivotement 14 traversant les deux branches et le tenon 15 perpendiculairement à ce dernier. De préférence, l'axe de pivotement 14 est constitué par une tige filetée dont une extrémité est solidaire d'un bouton moleté externe de manoeuvre 16 et la partie d'extrémité opposée est ancrée à un écrou 17 fixé dans la branche 13a de la chape 13 opposée au bouton 16. De la sorte, le bouton 16 peut être manoeuvré pour enserrer le tenon 15 entre les deux branches 13a de la chape 13 et bloquer cette articulation à une position inclinée déterminée du bras 12 relativement à l'armature 5.

La deuxième articulation comprend une seconde chape 18 d'axe d'articulation 19 perpendiculaire à l'axe d'articulation 14 et permettant le pivotement du bras de support 12 dans un plan incliné par rapport au plan passant par les deux montants 7 de l'armature 5 et de haut en bas à partir de la partie supérieure du montant 7 auquel est relié ce bras.

La chape d'articulation 18 est solidaire du tenon 15 engagé dans la première chape 13.

La chape d'articulation 18 reçoit entre ses deux branches 18a un tenon 20 traversé par l'axe d'articulation 19 et qui est solidaire de l'extrémité d'une tige rigide tubulaire 21 dont l'extrémité opposée est solidaire de la partie supérieure du montant correspondant 7 de manière que la tige rigide 21 soit inclinée de haut en bas par rapport à ce montant.

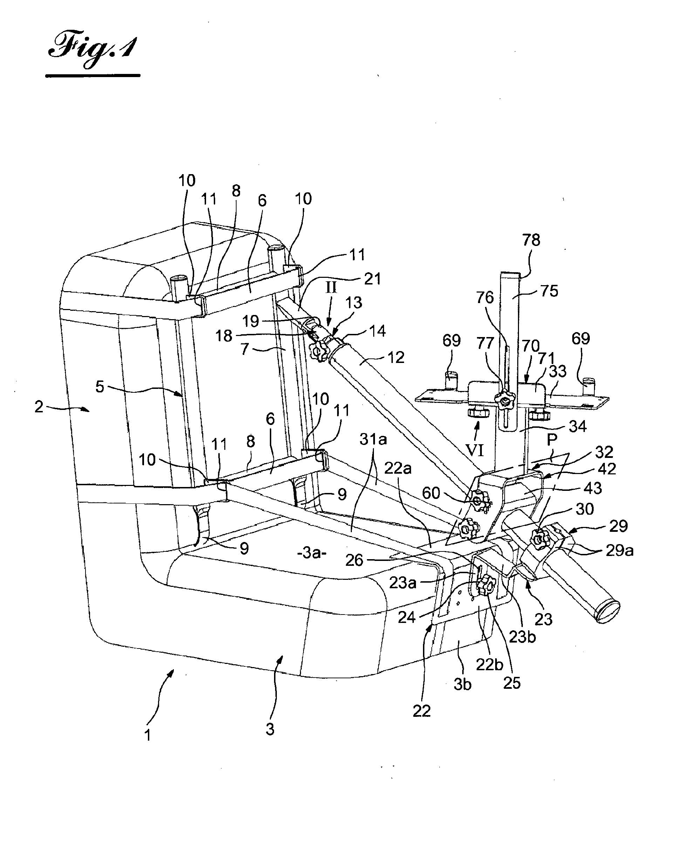

La partie d'extrémité du tube de support 12 opposée à celle articulée à l'armature 5 repose sur l'assise 3 du siège 1 par l'intermédiaire d'une plaque ou platine 22 à section transversale sensiblement en forme de L dont l'une des branches 22a est en appui sur une partie de la face supérieure 3a de l'assise 3 et l'autre branche sensiblement verticale 22b est en appui sur une partie de la face avant ou frontale 3b de l'assise 3 située au-dessus du plancher du véhicule comme représenté en figure 1.

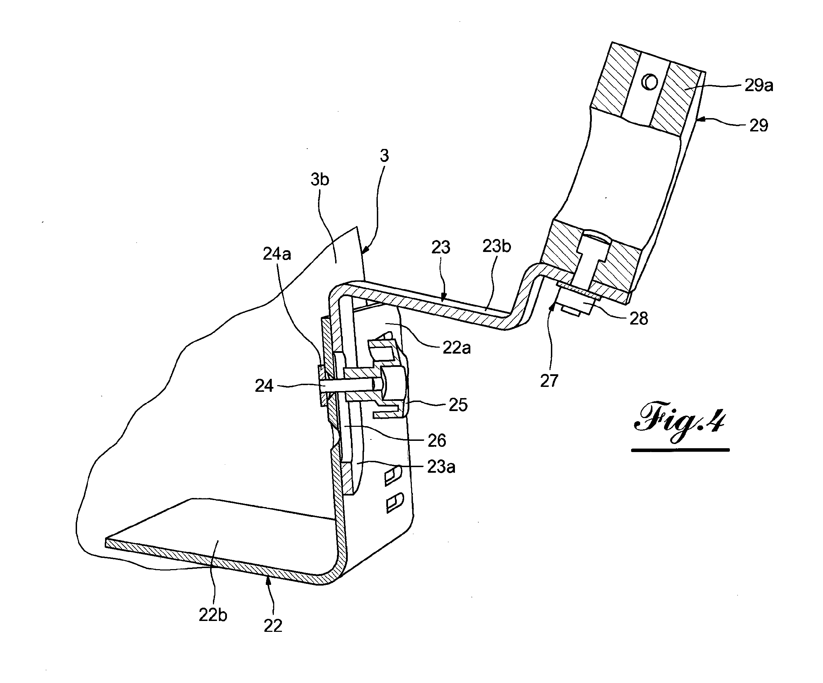

Selon la variante de réalisation représentée en figure 4, la plaque 22 est en appui sur l'assise 3 du siège 1 en ayant sa branche inférieure 22b en appui sous l'assise 3 du siège 1 et sa branche supérieure sensiblement verticale 22a en appui sur la face avant ou frontale 3b de cette assise.

La partie d'extrémité inférieure du bras de support 12 est fixée à la plaque d'appui 22 par l'intermédiaire d'une pièce en équerre 23 dont l'une inférieure 23a des branches est fixée à la branche inférieure 22b de la plaque 22 (figure 1) ou à la branche supérieure 22a de cette plaque (figure 4) par une vis de fixation 24 solidaire d'un bouton moleté externe de manoeuvre 25, la vis 24 traversant une lumière verticale 26 de la branche 22b ou 22a suivant la variante de réalisation du support de bras 12 et qui est formée au travers de la branche inférieure 23a de la pièce en équerre 23. La vis 24 du bouton 25 traverse un perçage de la branche inférieure 22b ou supérieure 22a et un écrou 24a visible uniquement en figure 4, lequel écrou est solidaire de la face interne de cette branche. De la sorte, la pièce en équerre 23 peut être réglée à une hauteur souhaitée relativement à la plaque 22 en appui sur l'assise 3 du siège 1 correspondant à une position inclinée déterminée du bras de support 12 qui est alors fixé à cette position en bloquant par le bouton 25 la branche inférieure 23a de la pièce en équerre 23 à la plaque 22.

L'autre branche supérieure 23b de la pièce en équerre 23 est fixée par un boulon 27 à écrou frein 28 à une mâchoire déformable et pivotante 29 enserrant la partie d'extrémité inférieure du bras 12 par blocage des éléments de mâchoire 29a à l'aide d'une vis de serrage, non représentée, solidaire d'un bouton moleté externe de manoeuvre 30.

La plaque 22 est fixée en appui sur l'assise 3 par deux sangles indépendantes 31a passant dans les deux lumières 11 des plots inférieurs 10 de l'armature 5 et sur les deux branches 22a, 22b de la plaque 22 en ayant leurs extrémités ancrées, par exemple par l'intermédiaire de pièces rigides en forme de crochets, sous l'assise 3.

En variante, la plaque 22 peut être fixée en appui sur l'assise 3 du siège 1 par deux sangles latérales indépendantes passant autour de l'assise et sur les deux branches 22a, 22b de cette plaque.

Bien entendu, chaque sangle est tendue à une tension déterminée par des moyens de tension classiques pour fixer rigidement la plaque d'appui 22 à l'assise 3 du siège 1.

Le dispositif de l'invention comprend en outre une partie 32 formant pied de support d'une platine 33 de réception de l'ordinateur portable 4.

La partie 32 formant pied de support est montée à rotation autour du bras de support 12 et à coulissement guidé le long de ce bras pour positionner cette partie et, par conséquent, la platine 33 de support de l'ordinateur portable 4 à une position déterminée, par exemple celle où la platine 33 occupe une position sensiblement horizontale.

Cette partie 32, une fois positionnée à sa position choisie, est bloquée sur le bras de support 12 par des moyens de blocage qui seront décrits ci-dessous.

La partie 32 formant pied de support comprend une colonne cylindrique 34 portant à son extrémité supérieure la platine 33 par l'intermédiaire de moyens permettant de régler et bloquer en position la platine 33 relativement à la colonne 34.

Ces moyens comprennent un tenon 35 solidaire de la face inférieure de la platine 33 par l'intermédiaire d'une plaque circulaire 36 solidaire du tenon 35 perpendiculairement à celui-ci et fixée à la face inférieure de la platine 33. Le tenon 35 est engagé dans une fente longitudinale 37 de la colonne 34 et comporte une lumière longitudinale 38 qui est traversée par une vis 39 s'étendant perpendiculairement au tenon 35 et à la colonne 34 en ayant sa tête 40 noyée dans un lamage de la colonne 34.

Un organe de manoeuvre externe 41, tel qu'une manette, est vissé sur une partie d'extrémité de la vis 39 faisant saillie de la colonne 34 de manière à bloquer par serrage le tenon 35 dans la fente 37 de la colonne 34 par rapprochement l'une de l'autre des deux branches de la colonne 34 définissant la fente 37 lors de la manoeuvre de la manette 41 dans le sens de serrage de la vis 39. Ainsi, pour régler en position la platine 33 relativement à la colonne 34, il suffit de desserrer la manette 41 et de déplacer longitudinalement le tenon 35 dans la fente 37 relativement à la vis 39 jusqu'à la position à laquelle le tenon 35 est bloqué dans la fente 37 par serrage de la manette 41.

En fait, ces moyens de réglage et de blocage en position de la platine 33 relativement à la colonne 34 constituant une articulation sont utilisés uniquement pour le conditionnement du dispositif de l'invention dans une valise comme on le verra ultérieurement.

La partie 32 formant pied de support comprend également une chape 42 de support de la colonne 34 et un bloc 43 de support de la chape 42 monté à rotation et à coulissement guidé sur le bras de support 12.

Le bloc 43 se présente sous la forme générale d'un cube comportant un perçage central 44 dans lequel est engagé à faible jeu le bras de support 12 et la chape 42 est montée sur le bloc 43 en ayant ses deux branches parallèles 45 en appui respectivement sur les deux faces latérales parallèles correspondantes du bloc 43.

La chape 42 peut pivoter relativement au bloc 43 et être en partie bloquée à ce bloc à une position angulaire relative déterminée par les moyens de blocage permettant de bloquer ce bloc au bras de support 12.

Ces moyens de blocage comprennent une tige filetée 46 traversant l'une 45 des branches de la chape 42 et le bloc 43 perpendiculairement au bras de support 12, un écrou 47 ancré à une extrémité de la tige filetée 46 et inséré dans un logement 48 du bloc 43 de manière à pouvoir se déplacer dans le logement 48 suivant une direction transversale au bras de support 12. Ces moyens de blocage comprennent également un tampon tangent 49 inséré dans le logement 48 du bloc 43 et formant avec l'écrou 47 un équipage mobile permettant le déplacement concomitant de l'écrou 47 et du tampon tangent 49 suivant une direction transversale au bras de support 12.

Les moyens de blocage comprennent en outre une entretoise 50 traversant la branche correspondante 45 de la chape 42 et engagée dans un orifice conjugué 51 du bloc 43, l'entretoise 50 comprenant une collerette 52 en appui sur la face externe correspondante de la branche 45 de la chape 42.

La tige filetée 46 traverse l'entretoise 50 et est vissée par son extrémité opposée dans un perçage taraudé d'un bouton moleté rotatif et externe 53.

Le déplacement de l'équipage mobile est guidé par une goupille G solidaire du bloc 43 et engagée dans une rainure RA du tampon tangent 49. Un ressort R est interposé précontraint entre l'entretoise 50 et le tampon tangent 49 concentriquement à la tige filetée 46.

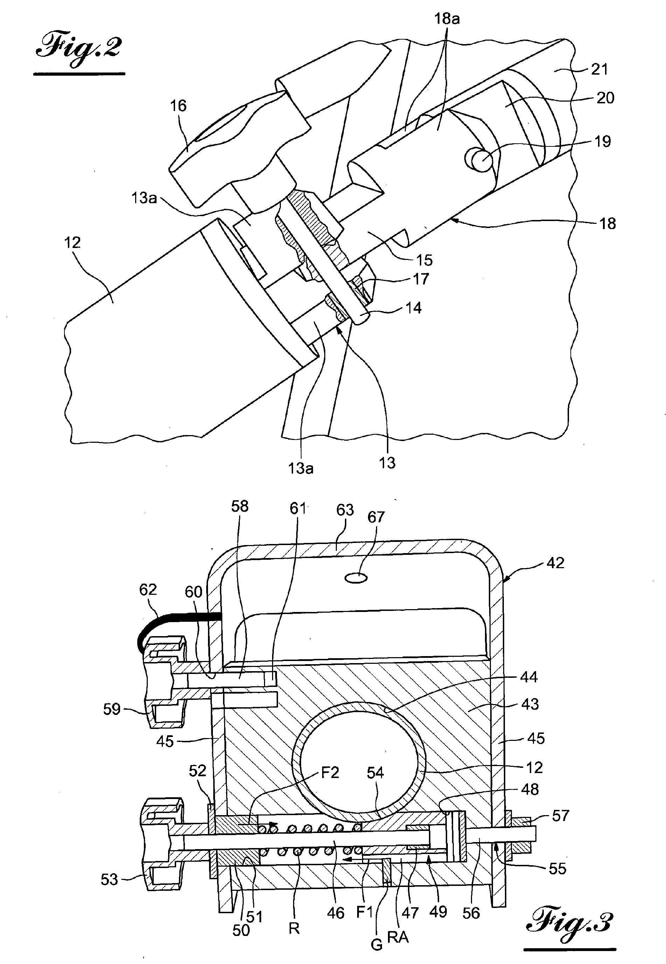

Lorsque le bouton 53 est tourné dans le sens des aiguilles d'une montre, il provoque le déplacement en translation, par l'intermédiaire de la tige filetée 46, de l'équipage mobile constitué de l'écrou 47 et du tampon tangent 49 vers l'entretoise 50 comme indiqué par la flèche F1 en figure 3 de manière à amener en appui forcé une partie arquée 54 du tampon tangent 49 sur une portion périphérique du bras de support 12 pour bloquer en translation et en rotation le bloc 43 à une position déterminée relativement au bras de support 12. En outre, la rotation du bouton 53 provoque également le déplacement de l'entretoise 50 dans le bloc 43 comme indiqué par la flèche F2 en figure 3 pour amener en appui forcé la collerette 52 de l'entretoise 50 sur la face externe de la branche 45 de la chape 42 et serrer ainsi cette branche sur la face latérale correspondante du bloc 43. Pour régler à nouveau la position relativement au bras de support 12 de l'ensemble formant pied de support 32, il suffit tout simplement de manoeuvrer le bouton 53 dans le sens du desserrage pour provoquer le déplacement de l'équipage mobile en sens contraire de la flèche F1 permettant de désengager la partie arquée 54 du tampon tangent 49 du bras de support 12, désengagement facilité par le ressort R.

Le pivotement de la chape 42 relativement au bloc 43 peut être contrôlé par des organes de freinage de ce pivotement comprenant un boulon 55 disposé coaxialement à la tige filetée 46 à l'opposé du bouton rotatif 53 et dont la vis 56 a sa tête ancrée dans le bloc 43 et traverse l'autre branche 45 de la chape 42, l'écrou 57, du type frein, de ce boulon étant ancré sur la partie d'extrémité externe de la vis 56 et serré à un couple de serrage permettant le pivotement contrôlé de la chape 42.

En outre, la chape 42 est verrouillée à une position angulaire déterminée relativement au bloc 43 par une goupille 58 solidaire d'un bouton externe 59 et qui peut être introduite au travers de l'un de plusieurs perçages d'indexation 60 de l'une des branches 45 de la chape 42 et d'un perçage 61 du bloc 43.

Une fois introduite dans le perçage 61 du bloc 43, la goupille s'étend parallèlement à la tige filetée 46 au-dessus de celle-ci et du bras de support 12. De préférence, la goupille 58 traverse le perçage 60 de la branche 45 de la chape 42 où se trouve le bouton 53 de blocage du bloc 43 relativement au bras de support 12.

Avantageusement, le bouton 59 est relié de manière imperdable à la chape 42 par un cordon 62 qui peut être réalisé sous forme d'un fil élastique exerçant un effort maintenant la goupille 58 dans le perçage 61 du bloc 43.

Bien entendu, le pivotement de la chape 42 relativement au bloc 43, avant de l'immobiliser à ce bloc par la goupille 58, s'effectue autour d'un axe coaxial à la tige filetée 46 et au boulon 55.

La colonne 34 de la partie 32 formant pied de support est solidarisée à l'âme 63 de la chape 42 par un moyen autorisant un réglage de position de la colonne 34 relativement à la chape 32 par rotation d'elle-même autour de son axe longitudinal.

Ce moyen comprend un boulon 64 dont la vis 65 est ancrée dans la colonne 34 dans un perçage central longitudinal de cette colonne et la tête de vis 66 est en appui au fond de la fente 34 de la colonne 34 en dessous du tenon 35. La vis traverse un perçage 67 de l'âme 63 de la chape 42 et l'écrou 68, du type frein, du boulon 64 est vissé à la partie filetée de la vis 65 faisant saillie sous l'âme 63 à un couple de serrage permettant une rotation contrôlée de la colonne 34 relativement à l'âme 63 autour de son axe longitudinal en agissant sur la platine 33.

La goupille 58 constitue en outre un verrouillage de sécurité en cas de choc violent ou de roulage violent sur la partie 32 formant pied de support.

La platine 33 de support de l'ordinateur portable 4 comprend, solidaires de l'un de ses bords latéraux, deux pattes espacées en forme de crochets 69 sous lesquelles peut être positionné le bord avant de la partie formant clavier 4a de l'ordinateur portable 4, et une plaque en équerre 70 à déplacement guidé relativement à la platine 33 et pouvant être amoviblement fixée à cette dernière à une position à laquelle le bord arrière de l'ordinateur portable 4 peut venir en appui sur l'une 71 des branches de l'équerre faisant saillie au-dessus de la platine 33 perpendiculairement à cette dernière.

L'autre branche 72 de la plaque en équerre 70 comporte deux lumières parallèles de guidage 73 s'étendant perpendiculairement à la branche 71 et qui sont chacune traversées par une vis FHC, non représentée, solidaire d'un bouton externe de manoeuvre 74 et ancrées dans un trou, non représenté, de la platine 33. De la sorte, en desserrant les deux boutons 74, la plaque en équerre 70 peut coulisser relativement à la platine 33 le long de ses lumières 73 à une position choisie de la branche 71 relativement à la platine 33 et tenant compte des dimensions en largeur de l'ordinateur portable 4 qui est ainsi bloqué transversalement à la platine 3 par les pattes 69 et la plaque en équerre 70 fixée à la platine 33 par serrage des boutons 74.

Ainsi, la plaque en équerre peut coulisser suivant une direction transversale au véhicule si la platine 33 s'étend parallèlement à la direction longitudinale de ce véhicule.

La plaque en équerre 70 est pourvue d'un bras 75 réglable en hauteur relativement à cette plaque et permettant de maintenir l'écran 4a de l'ordinateur portable 4 en position ouverte.

A cet effet, le bras 75 comporte une lumière longitudinale 76 traversée par une vis FHC, non représentée, solidaire d'un bouton externe de manoeuvre 77 et ancrée dans un trou de la branche 71 de la plaque en équerre 70. Ainsi, le bras 75 peut être déplacé en hauteur relativement à la branche 71 de la plaque en équerre 70 par la lumière 76 coulissant relativement à la vis de fixation du bouton 77 à la branche 71, lequel bouton peut être serré pour fixer le bras 75 à la position de réglage souhaitée relativement à la platine de support 33.

Le bras 75 comporte à son extrémité libre une partie en forme de crochet 78 sous laquelle peut s'engager une partie du bord supérieur de l'écran 4a de l'ordinateur portable 4.

Ainsi, le bras 75 peut être réglé à une position tenant compte des dimensions de l'écran de l'ordinateur portable pour maintenir l'écran relativement à sa platine de support 33.

Un moyen de fixation rapide de l'ordinateur portable sur la platine 33 sont prévus pour maintenir celui-ci en cas de choc violent ou de roulage violent suivant une direction parallèle à la branche supérieure 71 de la plaque en équerre 70 et aux deux pattes en équerre de retenue 69.

Ce moyen de fixation rapide comprend une cordelette 79 fixée à ses deux extrémités respectivement à deux taquets 80 solidaires de la face inférieure de la platine 33 à proximité des pattes de retenue 69, traversant la platine 33 à deux emplacements opposés aux pattes de retenue 69 en passant au-dessus du bord arrière de l'ordinateur portable à des emplacements n'obstruant pas la connectique présente sur la face arrière de cet ordinateur et longeant la charnière d'articulation de l'écran 4a à la partie formant clavier 4b de l'ordinateur portable 4.

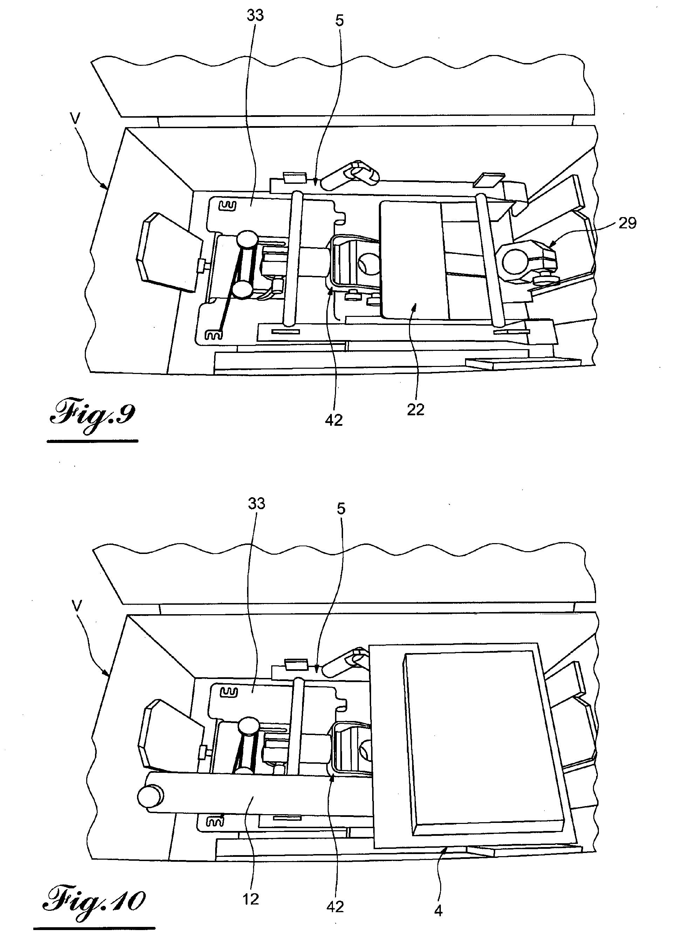

Par ailleurs, le dispositif de l'invention peut être facilement rangé dans une valise de rangement V comme représenté en figure 9.

A cet effet, la pièce en équerre 23 et la plaque d'appui 22 sont tout d'abord désolidarisées du tube de support 12 en dévissant le bouton 30 de serrage de la mâchoire 29.

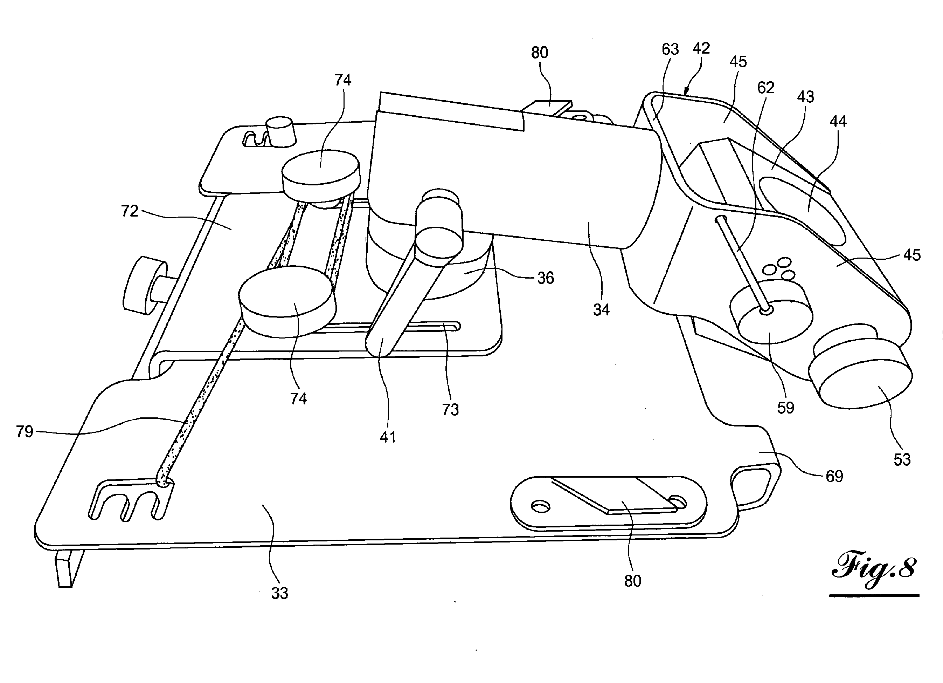

Ensuite, la partie 32 formant pied de support est désengagée du tube de support 12 en desserrant le bouton 53 et la manette ou poignée 41 est manoeuvrée pour desserrer le tenon 35 d'entre les deux branches de la colonne 34 définissant la fente 37 de cette colonne pour permettre le pivotement de la partie 32 formant pied de support relativement au tenon 35 solidarisé à la face interne de la platine 33 comme représenté en figure 8. Ainsi, cet ensemble replié peut être logé au fond de la valise de rangement V avec l'ensemble comprenant la pièce en équerre 23 et la mâchoire 29, l'équerre 70 reste sur la platine support 33, le bouton 77 ayant été également desserré pour basculer le bras 75 à une position parallèle à la branche 71 de la plaque en équerre 70.

Ensuite, le bras de support 12 est désolidarisé du tenon 15 solidaire de la chape 18 en dévissant le bouton 16 pour permettre le retrait de la vis 14 de la chape 13 de sorte que l'armature 5 et la tige 21 pourvue de la chape 18 peut être logée à plat dans la valise au-dessus des ensembles précédemment installés.

Les diverses sangles de fixation 6, 31 sont également rangées en des emplacements appropriés libres dans la valise de rangement V et, enfin, l'ordinateur portable est logé dans cette valise au-dessus du bras 12 de l'armature 5 comme représenté en figure 10 sur une plaque 4 bloquée en translation et équipée de mousses permettant un blocage de l'ordinateur dans les trois axes.

Le cas échéant, la valise de rangement V peut être pourvue de roulettes facilitant son transport. Bien entendu, cette valise est étanche et peut-être réalisée en un matériau à base de polyéthylène en étant équipée de mousses spécifiques permettant un rangement efficace du dispositif de l'invention et de ses périphériques comprenant notamment l'ordinateur portable.

Le dispositif de l'invention permet ainsi au metteur au point de positionner l'ordinateur portable sur le siège passager avant du véhicule dans le champ de vision normal du metteur au point sans affecter le champ de vision de conduite afin de permettre au conducteur de conduire en toute sécurité en rendant visible le rétroviseur droit du véhicule. Le dispositif permet de maintenir l'ordinateur portable dans toutes les configurations de roulage et en cas de choc violent appliqué au véhicule. Il peut être adapté à tout type de véhicule du genre sportif, berline, monospace, utilitaire, etc. Ce dispositif peut être installé rapidement, en dix minutes au maximum, et sans outillage. Il peut être facilement conditionné dans une valise pour faciliter son transport et des périphériques de mesure comprenant notamment l'ordinateur portable. Enfin, le dispositif de l'invention est peu coûteux.

## Revendications

1. Dispositif permettant de supporter un ordinateur portable (4) à un siège (1) d'un véhicule, tel qu'un véhicule automobile, avec une armature (5) pouvant être amoviblement fixée à la face avant (2a) du dossier (2) par au moins une sangle (6), un ensemble de support d'une platine (33) de réception de l'ordinateur portable (4) comprenant un bras de support (12) ayant l'une de ses extrémités reliée articulée à l'armature (5) et son extrémité opposée reliée à une plaque (22), **caractérisé en ce que** la plaque (22) pouvant venir en appui sur l'assise (3) du siège (1) et une partie (32) formant pied de support de la platine (33) montée à rotation et à coulissement guidé sur le bras de support (12) et pouvant être bloquée sur ce dernier par des moyens de blocage à une position relative prédéterminée, la partie (32) formant pied de support comprenant une colonne (34) portant à l'une de ses extrémités la platine (33).

2. Dispositif selon la revendication 1, **caractérisé en ce que** la partie (32) formant pied de support comprend également une chape (42) de support de la colonne (34) et un bloc (43) de support de la chape (42) monté à rotation et à coulissement guidé sur le bras de support (12), la chape (42) pouvant pivoter relativement au bloc (43) et être bloquée au bloc à une position angulaire relative déterminée par les moyens de blocage permettant de bloquer le bloc (43) au bras de support (12).

3. Dispositif selon la revendication 2, **caractérisé en ce que** la colonne (34) est solidarisée à l'âme (63) de la chape (42) par un moyen autorisant un réglage de position de la colonne (34) relativement à la chape par rotation autour d'elle-même.

4. Dispositif selon la revendication 2 ou 3, **caractérisé en ce que** les moyens de blocage du bloc (43) au bras de support (12) et de la chape (42) à ce bloc comprennent une tige filetée (46) traversant l'une des branches (45) de la chape (42) et le bloc (43) perpendiculairement au bras de support(12), un écrou (47) inséré dans un logement (48) du bloc(43), apte à se déplacer dans le logement (48) en direction transversale au bras de support (12) et ancré à une extrémité de la tige filetée (46) qui est solidarisée à son extrémité opposée à un organe externe rotatif de serrage(53), tel qu'un bouton, apte à entraîner en rotation la tige filetée (46), un tampon tangent (49) inséré dans le logement (48) du bloc (43) et formant avec l'écrou (47) un équipage mobile, et une entretoise (50) à collerette externe (52) montée coaxialement à la tige filetée (46) entre l'organe externe (53) et le bloc (43) en traversant la branche (45) de la chape (42) et engagée dans un orifice (51) du bloc (43), une manoeuvre de l'organe rotatif (53) provoquant le déplacement en translation de l'équipage mobile pour amener le tampon tangent (49) en appui forcé sur le bras de support (12) et bloquer le bloc (43) à ce bras et de l'entretoise (50) pour bloquer la chape (42) relativement au bloc (43) en enserrant la branche (45) de la chape (42) entre la collerette (52) de l'entretoise (50) et le bloc (43).

5. Dispositif selon la revendication 4, **caractérisé en ce que** des organes de freinage du pivotement de la chape (42) relativement au bloc (43) sont prévus entre le bloc (43) et l'autre des branches (45) de la chape(42).

6. Dispositif selon la revendication 5, **caractérisé en ce que** les organes de freinage comprennent un boulon (55) coaxial à la tige filetée (46) de l'organe rotatif (53) et dont la vis (56) a sa tête logée dans le bloc (43) en traversant l'autre branche (45) de la chape (42) , et l'écrou (57), du type frein, est serré sur l'autre branche (45) à un couple de serrage permettant le pivotement contrôlé de la chape (42).

7. Dispositif selon l'une des revendications 2 à 5, **caractérisé en ce qu'**il comprend un moyen de verrouillage de la chape (42) à une position angulaire relativement au bloc (43) et comprenant une goupille (58) solidaire d'un bouton externe (59) apte à être sélectivement introduite au travers de l'un de plusieurs perçages (60) d'indexation de la branche (45) de la chape (42) et d'un perçage (61) du bloc (43).

8. Dispositif selon l'une des revendications précédentes, **caractérisé en ce qu'**il comprend des moyens de réglage et de blocage en position de la platine (33) relativement à la colonne (34) et comprenant un tenon (35) solidaire de la platine (33) perpendiculairement à celle-ci engagé dans une fente longitudinale (37) de la colonne (34), une vis (39) traversant la fente (37) de la colonne (34) et une lumière longitudinale (38) du tenon (35) et un bouton ou une manette externe (41) de serrage de la vis (39) pour bloquer le tenon (35) dans la fente (37) de la colonne (34) à une position longitudinale choisie du tenon (35) relativement à la colonne (34).

9. Dispositif selon l'une des revendications 3 à 8, **caractérisé en ce que** le moyen de réglage de position de la colonne (34) relativement à la chape (42) comprend un boulon (64) dont la vis (65) est ancrée longitudinalement dans la colonne (34) en traversant l'âme (63) de la chape (42) et l'écrou du type frein (68) est serré sous l'âme (63) de la chape (42).

10. Dispositif selon l'une des revendications précédentes, **caractérisé en ce que** le bras de support (12) est relié en partie supérieure de l'armature (5) par l'intermédiaire de deux chapes successives d'articulation (13,18) autorisant le pivotement du bras (12) dans un plan perpendiculaire à l'assise (3) du siège (1) et dans un plan incliné relativement au dossier (2) du siège (1), l'axe d'articulation de la chape (13) autorisant le pivotement du bras (12) dans un plan perpendiculaire à l'assise (3) du siège (1) étant constitué par une vis (14) à bouton externe (16) de blocage de cette articulation.

11. Dispositif selon l'une des revendications précédentes, **caractérisé en ce que** la plaque d'appui (22) du bras de support (12) sur l'assise (3) du siège (1) est fixée à l'assise (3)par au moins une sangle (31).

12. Dispositif selon l'une des revendications précédentes, **caractérisé en ce que** la plaque d'appui (22) du bras de support (12) sur l'assise (3) du siège (1) est en forme de L et est fixée à ce bras par l'intermédiaire d'une équerre (23) dont l'une (22a) des branches est fixée à l'une des branches (22a ; 22b) de la plaque d'appui (22) par une vis (24) à bouton externe de manoeuvre (25) traversant une lumière (26) de la branche de l'équerre (23) pour un réglage en hauteur de l'extrémité du bras de support (12) et l'autre branche (23b) est fixée à l'extrémité du bras de support (12) par une mâchoire (29).

13. Dispositif selon l'une des revendications précédentes, **caractérisé en ce que** la platine (33) de réception de l'ordinateur portable (4) comprend deux pattes en forme de crochet (69) sous lesquelles peut être positionné le bord avant de l'ordinateur portable (4), une plaque en équerre (70) mobile relativement à la platine (33) et pouvant être amoviblement fixée à cette dernière à une position à laquelle peut venir en appui le bord arrière de l'ordinateur portable (4) et un bras (75) pouvant être fixé à une position réglable en hauteur relativement à la plaque en équerre (70) pour maintenir l'écran de l'ordinateur portable (4) en position ouverte et **en ce que** l'ordinateur portable (4) est également fixé sur la platine par un moyen de fixation rapide (79) du genre à cordelette passant le long de la charnière d'articulation de l'écran au clavier de l'ordinateur portable.

14. Dispositif selon l'une des revendications précédentes, **caractérisé en ce qu'**il peut être rangé avec l'ordinateur portable (4) dans une valise (V) pouvant être équipée de roulettes de déplacement.

15. Véhicule, tel qu'un véhicule automobile, **caractérisé en ce qu'**il comprend un dispositif tel que défini dans l'une quelconque des revendications précédentes et monté au siège passager avant (1) de ce véhicule.

## Patentansprüche

1. Vorrichtung, die es erlaubt, einen Laptop (4) an einem Sitz (1) eines Fahrzeugs, wie zum Beispiel eines Kraftfahrzeugs zu halten, mit einer Bewehrung (5), die abnehmbar an der Vorderseite (2a) der Rückenlehne (2) durch mindestens einen Gurt (6) befestigt werden kann, einer Trageinheit einer Platte (33) zur Aufnahme des Laptops (4), die einen Tragarm (12) aufweist, der eines seiner Enden gelenkig mit der Bewehrung (5) verbunden hat und sein gegenüberliegendes Ende mit einer Tafel (22) verbunden hat, wobei die Tafel (22) auf der Sitzfläche (3) des Sitzes (1) zum Aufliegen kommen kann, und ein Teil (32), das einen Stützfuß der Platte (33) bildet kann, die drehend und gleitend geführt auf dem Stützarm (12) montiert ist und auf diesem Letzteren durch Blockierungsmittel an einer vorbestimmten relativen Position blockiert werden kann, wobei das Teil (32) einen Stützfuß bildet, der eine Säule (34) aufweist, die an einem ihrer Enden die Platte (33) trägt.

2. Vorrichtung nach Anspruch 1, **dadurch gekennzeichnet, dass** das Teil (32), das einen Stützfuß bildet, auch eine Gabel (42) zum Tragen der Säule (34) und einen Block (43) zum Tragen der Gabel (42) aufweist, der drehend und gleitend auf dem Stützarm (12) geführt montiert ist, wobei die Gabel (42) in Bezug auf den Block (43) schwenken und an dem Block in einer relativen Winkelposition blockiert werden kann, die durch die Blockierungsmittel bestimmt ist, die es erlauben, den Block (43) an dem Stützarm (12) zu blockieren.

3. Vorrichtung nach Anspruch 2, **dadurch gekennzeichnet, dass** die Säule (34) fest mit dem Kern (63) der Gabel (42) durch ein Mittel verbunden ist, das eine Positionseinstellung der Säule (34) in Bezug auf die Gabel durch Drehung um sich selbst gestattet.

4. Vorrichtung nach Anspruch 2 oder 3, **dadurch gekennzeichnet, dass** die Blockierungsmittel des Blocks (43) an dem Tragarm (12) und der Gabel (42) an diesem Block einen Gewindestift (46) aufweisen, der einen der Schenkel (45) der Gabel (42) und den Block (43) senkrecht zu dem Tragarm (12) durchquert, eine Mutter (47), die in einer Aufnahme (48) des Blocks (43) eingefügt ist, die geeignet ist, um sich in der Aufnahme (48) in Querrichtung zu dem Tragarm (12) zu bewegen und an einem Ende des Gewindestifts (46) verankert ist, der an seinem gegenüberliegenden Ende an einem externen Spanndrehorgan (53), wie zum Beispiel einem Knopf, fest verbunden ist, das fähig ist, den Gewindeschaft (46) in Drehung anzutreiben, einen tangierenden Puffer (49), der in die Aufnahme (48) des Blocks (43) eingefügt ist und mit der Mutter (47) ein bewegliches Organ bildet, und einen Abstandhalter (50) mit externem Kragen (52), der koaxial an dem Gewindestift (46) zwischen dem externen Organ (53) und dem Block (43) unter Durchqueren des Schenkels (45) der Gabel (42) montiert und in eine Öffnung (51) des Blocks (43) eingefügt ist, wobei eine Betätigung des Drehorgans (53) die Verschiebungsbewegung des beweglichen Organs verursacht, um den tangierenden Puffer (49) in forcierte Auflage auf dem Tragarm (12) zu bringen und den Block (43) an diesem Arm zu blockieren, und des Abstandhalters (50), um die Gabel (42) in Bezug auf dem Block (43) zu blockieren, indem der Schenkel (45) der Gabel (42) zwischen dem Kragen (52) des Abstandhalters (50) und dem Block (43) blockiert wird.

5. Vorrichtung nach Anspruch 4, **dadurch gekennzeichnet, dass** Bremsorgane des Schwenkens der Gabel (42) in Bezug auf den Block (43) zwischen dem Block (43) und dem anderen Schenkel (45) der Gabel (42) vorgesehen sind.

6. Vorrichtung nach Anspruch 5, **dadurch gekennzeichnet, dass** die Bremsorgane einen Bolzen (55) aufweisen, der zu dem Gewindestift (46) des Drehorgans (53) koaxial ist und dessen Schraube (56) ihren Kopf in dem Block (43) unter Durchqueren des anderen Schenkels (45) der Gabel (42) aufgenommen hat, und die Mutter (57) des Typs Sicherheitsmutter auf dem anderen Schenkel (45) auf ein Anziehdrehmoment, das das gesteuerte Schwenken der Gabel (42) erlaubt, festgezogen ist.

7. Vorrichtung nach einem der Ansprüche 2 bis 5, **dadurch gekennzeichnet, dass** sie ein Verriegelungsmittel der Gabel (42) in einer Winkelposition in Bezug auf den Block (43) aufweist und einen Stift (58) aufweist, der fest mit einem externen Knopf (59) verbunden ist, der fähig ist, selektiv durch eine von mehreren Positionierungsbohrungen (60) des Schenkels (45) der Gabel (42) und eine Bohrung (61) des Blocks (43) eingefügt zu werden.

8. Vorrichtung nach einem der vorhergehenden Ansprüche, **dadurch gekennzeichnet, dass** sie Mittel zum Einstellen und Blockieren in Position der Platte (33) in Bezug auf die Säule (34) aufweist und einen Zapfen (35) aufweist, der fest mit der Tafel (33) senkrecht zu dieser in einen Längsschlitz (37) der Säule (34) eingefügt verbunden ist, wobei eine Schraube (39) den Schlitz (37) der Säule (34) und eine Längsöffnung (38) des Zapfens (35) durchquert, und einen Knopf oder ein externes Betätigungselement (41) zum Festziehen der Schraube (39), um den Zapfen (35) in dem Schlitz (37) der Säule (34) an einer ausgewählten Längsposition des Zapfens (35) in Bezug auf die Säule (34) zu blockieren.

9. Vorrichtung nach einem der Ansprüche 3 bis 8, **dadurch gekennzeichnet, dass** das Positionseinstellmittel der Säule (34) in Bezug auf die Gabel (42) einen Bolzen (64) aufweist, dessen Schraube (65) längs in der Säule (34) verankert ist, indem er den Kern (63) der Gabel (42) durchquert, und die Mutter des Typs Sicherungsmutter (68) unter dem Kern (63) der Gabel (42) festgezogen ist.

10. Vorrichtung nach einem der vorhergehenden Ansprüche, **dadurch gekennzeichnet, dass** der Tragrahmen (12) im oberen Teil der Bewehrung (5) über zwei aufeinander folgende Anlenkgabeln (13, 18) verbunden ist, die das Schwenken des Arms (12) in einer Ebene senkrecht zu der Sitzfläche (3) des Sitzes (1) und in einer schiefen Ebene in Bezug auf die Rückenlehne (2) des Sitzes (1) gestatten, wobei die Anlenkachse der Gabel (13), die das Schwenken des Arms (12) in einer Ebene senkrecht zu der Sitzfläche (3) des Sitzes (1) gestattet, aus einer Schraube (14) mit externem Blockierungsknopf (16) dieser Anlenkung besteht.

11. Vorrichtung nach einem der vorhergehenden Ansprüche, **dadurch gekennzeichnet, dass** die Auflagetafel (22) des Tragarms (12) auf der Sitzfläche (3) des Sitzes (1) an der Sitzfläche (3) durch mindestens einen Gurt (31) befestigt ist.

12. Vorrichtung nach einem der vorhergehenden Ansprüche, **dadurch gekennzeichnet, dass** die Auflageplatte (22) des Tragarms (12) auf der Sitzfläche (3) des Sitzes (1) L-Form hat und an diesem Arm über ein Winkelteil (23) befestigt ist, von dem ein Schenkel (22a) an einem der Schenkel (22a; 22b) der Auflagetafel (22) durch eine Schraube (24) mit externem Betätigungsknopf (25), die eine Längsöffnung (26) des Schenkels des Winkelteils (23) für eine Höheneinstellung des Endes des Tragarms (12) durchquert, befestigt ist, und der andere Schenkel (23b) an dem Endet des Tragarms (12) durch eine Backe (29) befestigt ist.

13. Vorrichtung nach einem der vorhergehenden Ansprüche, **dadurch gekennzeichnet, dass** die Platte (33) zur Aufnahme des Laptops (4) zwei Pratzen in Hakenform (69) aufweist, unter welchen der Rand des Laptops (4) positioniert werden kann, eine Winkeltafel (70), die in Bezug auf die Platte (33) beweglich ist und abnehmbar an dieser Letzteren an einer Position befestigt werden kann, an der der hintere Rand des Laptops (4) zum Aufliegen kommen kann, und einen Arm (75), der an einer höhenverstellbaren Position in Bezug auf die Winkeltafel (70) befestigt werden kann, um den Bildschirm des Laptops (4) in offener Position zu halten, und dass der Laptop (4) ebenfalls auf der Platte durch ein Schnellbefestigungsmittel (79) des Typs Kordel, die entlang des Anlenkscharniers des Bildschirms an der Tastatur des Laptops verläuft, befestigt ist.

14. Vorrichtung nach einem der vorhergehenden Ansprüche, **dadurch gekennzeichnet, dass** sie mit dem Laptop (4) in einem Koffer (V), der mit Fahrrollen ausgestattet sein kann, verstaut werden kann.

15. Fahrzeug, wie zum Beispiel ein Kraftfahrzeug, **dadurch gekennzeichnet, dass** es eine Vorrichtung wie in einem der vorhergehenden Ansprüche definiert und an dem vorderen Beifahrersitz (1) dieses Fahrzeugs montiert aufweist.

## Claims

1. A device permitting a portable computer (4) to be supported at a seat (1) of a vehicle, such as a motor vehicle, with a frame (5) being able to be detachably fixed to the front face (2a) of the backrest (2) by at least one strap (6), a support assembly of a stage (33) to receive the portable computer (4) including a support arm (12) having one of its ends connected articulated to the frame (5) and its opposite end connected to a plate (22), **characterized in that** the plate (22), able to come to rest on the pan (3) of the seat (1) and a part (32) forming a support foot of the stage (33) rotatably mounted and slidably guided on the support arm (12) and being able to be locked on the latter by locking means at a predetermined relative position, the part (32) forming a support foot including a column (34) carrying the stage (33) at one of its ends.

2. The device according to claim 1, **characterized in that** the part (32) forming a support foot also includes a support yoke (42) of the column (34) and a support block (43) of the yoke (42) mounted rotatably and guided slidably on the support arm (12), the yoke (42) being able to pivot relative to the block (43) and to be locked to the block at a relative angular position determined by the locking means permitting the block (43) to be locked to the support arm (12).

3. The device according to claim 2, **characterized in that** the column (34) is secured to the web (63) of the yoke (42) by a means permitting a position adjustment of the column (34) relative to the yoke by rotation about it.

4. The device according to claim 2 or 3, **characterized in that** the locking means of the block (43) to the support arm (12) and of the yoke (42) to this block include a threaded rod (46) passing through one of the branches (45) of the yoke (42) and the block (43) perpendicularly to the support arm (12), a nut (47) inserted into a housing (48) of the block (43), able to move in the housing (48) in transverse direction to the support arm (12) and anchored at an end of the threaded rod (46) which is secured at its opposite end to an external rotary tightening member (53), such as a button, able to drive in rotation the threaded rod (46), a tangent plug (49) inserted in the housing (48) of the block (43) and forming with the nut (47) a moving assembly, and a spacer (50) with an external flange (52) mounted coaxially to the threaded rod (46) between the external member (53) and the block (43) by passing through the branch (45) of the yoke (42) and engaged in an orifice (51) of the block (43), an operation of the rotary member (53) causing the displacement in translation of the moving assembly to bring the tangent plug (49) to rest in a forced manner on the support arm (12) and to lock the block (43) to this arm and of the spacer (50) to lock the yoke (42) relative to the block (43) by gripping the branch (45) of the yoke (42) between the flange (52) of the spacer (50) and the block (43).

5. The device according to claim 4, **characterized in that** members for braking the pivoting of the yoke (42) relative to the block (43) are provided between the block (43) and the other of the branches (45) of the yoke (42).

6. The device according to claim 5, **characterized in that** the braking members include a bolt (55) coaxial to the threaded rod (46) of the rotary member (53) and the screw (56) of which has its head housed in the block (43) by passing through the other branch (45) of the yoke (42), and the nut (57), of the brake type, is tightened on the other branch (45) at a tightening torque permitting the controlled pivoting of the yoke (42).

7. The device according to one of claims 2 to 5, **characterized in that** it includes a locking means of the yoke (42) at an angular position relative to the block (43) and including a pin (58) integral with an external button (59) able to be selectively introduced through one of several indexing bores (60) of the branch (45) of the yoke (42) and a bore (61) of the block (43).

8. The device according to one of the preceding claims, **characterized in that** it includes means for adjusting and locking in position the stage (33) relative to the column (34) and including a tenon (35) integral with the stage (33) perpendicularly thereto engaged in a longitudinal slot (37) of the column (34), a screw (39) passing through the slot (37) of the column (34) and a longitudinal port (38) of the tenon (35) and a button or an external lever (41) for tightening the screw (39) to lock the tenon (35) in the slot (37) of the column (34) at a selected longitudinal position of the tenon (35) relative to the column (34).

9. The device according to one of claims 3 to 8, **characterized in that** the means for adjusting the position of the column (34) relative to the yoke (42) includes a bolt (64), the screw (65) of which is anchored longitudinally in the column (34) by passing through the web (63) of the yoke (42) and the nut of the brake type (68) is tightened beneath the web (63) of the yoke (42).

10. The device according to one of the preceding claims, **characterized in that** the support arm (12) is connected in the upper part of the frame (5) by means of two successive clevis joints (13, 18) permitting the pivoting of the arm (12) in a plane perpendicular to the pan (3) of the seat (1) and in a plane inclined relative to the backrest (2) of the seat (1), the articulation axis of the clevis (13) permitting the pivoting of the arm (12) in a plane perpendicular to the pan (3) of the seat (1) being constituted by a screw (14) with an external button (16) for locking of this articulation.

11. The device according to one of the preceding claims, **characterized in that** the support plate (22) of the support arm (12) on the pan (3) of the seat (1) is fixed to the pan (3) by at least one strap (31).

12. The device according to one of the preceding claims, **characterized in that** the support plate (22) of the support arm (12) on the pan (3) of the seat (1) is L-shaped and is fixed to this arm by means of a bracket (23), one (22a) of the branches of which is fixed to one of the branches (22a; 22b) of the support plate (22) by a screw (24) with an external operating button (25) passing through a port (26) of the branch of the bracket (23) for a vertical adjustment of the end of the support arm (12), and the other branch (23b) is fixed to the end of the support arm (12) by a jaw (29).

13. The device according to one of the preceding claims, **characterized in that** the stage (33) for receiving the portable computer (4) includes two hook-shaped lugs (69), beneath which the front edge of the portable computer (4) can be positioned, an angle plate (70) movable relative to the stage (33) and being able to be detachably fixed to the latter at a position at which the rear edge of the portable computer (4) can come to rest and an arm (75) being able to be fixed at a vertically adjustable position relative to the angle plate (70) to hold the screen of the portable computer (4) in open position and **in that** the portable computer (4) is also fixed on the stage by a rapid fixing means (79) of the cord type passing along the articulation hinge of the screen to the keyboard of the portable computer.

14. The device according to one of the preceding claims, **characterized in that** it can be stored with the portable computer (4) in a case (V) being able to be equipped with transport wheels.

15. A vehicle, such as a motor vehicle, **characterized in that** it includes a device as defined in any one of the preceding claims and mounted to the front passenger seat (1) of this vehicle.
